(19)

Europäisches
Patentamt
European
Patent Office
Office européen
des brevets

(11)  **EP 3 147 861 A1**

(12)  **EUROPEAN PATENT APPLICATION**

(43) Date of publication:
29.03.2017  Bulletin 2017/13

(51) Int Cl.:
*G06T 7/00* (2017.01)

(21) Application number: **15306507.3**

(22) Date of filing: **28.09.2015**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br>Designated Validation States:<br><b>MA</b></td><td>(71) Applicant: <b>Thomson Licensing<br>92130 Issy-les-Moulineaux (FR)</b><br><br>(72) Inventor: <b>Sorgi, Lorenzo<br>30655 Hannover (DE)</b><br><br>(74) Representative: <b>Huchet, Anne et al<br>TECHNICOLOR<br>1-5, rue Jeanne d'Arc<br>92130 Issy-les-Moulineaux (FR)</b></td></tr>
</table>

(54)  **METHOD AND APPARATUS FOR DETERMINING A NORMAL OF A 3D PLANAR SURFACE**

(57)  A method and an apparatus for determining a normal of a 3D planar surface are described. For a 3D scene including a 3D planar surface, multiple images that show different views of the 3D scene are received (10). A set of point correspondences from the multiple images are extracted (11). Image gradients for the multiple images are determined (12) based on the set of point correspondences, and a normal of the 3D planar surface is then determined (13) using the image gradients.

**Fig. 2**

**Description**

**TECHNICAL FIELD**

A method and an apparatus for determining a normal of a 3D planar surface are described, which are particularly applied in the technical field of 3D visual reconstruction that is generally understood as a process to create a 3D model from a set of 2D images. In addition, a computer readable medium suitable for such a method and an apparatus is also presented.

**BACKGROUND**

Within the pipeline of 3D visual reconstruction, one specific and essential procedure is the estimation of the normal of a 3D planar surface in the scene using available 2D images.

Some techniques analyse the local distribution of a cloud of 3D points in the 3D space, and attempt to infer the local normal directly from the 3D points to fit a sort of moving plane. Most of the available algorithms and methods differentiate the formulation of the fitting geometrical model and introduce a regularization constraint enabling the recovery of a smooth surface. The input data of such methods is commonly assumed to be from a 3D range sensor [I, II]. ([I], [II] are two of references [I] through [IV] included in this specification and listed in a "Reference" section provided at the end of this specification.)

However, a 3D range sensor is expensive and cannot always be integrated within a vision system. In addition, it can be prone to frequent failure when a similar technique is applied to 3D point cloud reconstructed from merely visual data. For example, the data used in a general Structure from Motion technique can have irregular and often insufficient density. This problem might be improved by exploitation of dense matching techniques, which however would introduce a higher level of noise.

Another approach generally known as "photometric stereo" is purely based on visual data. Methods and algorithms attempt to recover 3D properties of a scene, e.g., the surface normal, from a perceived illuminance under the assumption of diffuse reflection and a lambertian behavior of the surface [III]. This approach is however strongly dependent on the illumination condition of the 3D scene and thus is hard and impractical to be employed as a general solution in a vision system.

There is a third approach including methods and algorithms derived from 3D computer vision theory. It can be shown that views of a planar surface taken from different camera poses are related to a 2D homography. Estimating the underlying homography and factorizing the homography matrix are thus typical approaches for recovering a 3D normal of a target surface [IV]. This approach is however merely suitable for 3D scenes comprised of one single plane or at least a few broad planar surfaces. For a general 3D scene, different homographies should be estimated for each image feature, which is quite difficult in practice because the image patch that can be safely assumed associated to a planar surface in a 3D scene is generally insufficient.

**SUMMARY**

Therefore, it is an object among others to present an improved solution for determining a normal of a 3D planar surface in a scene using available 2D images of the scene. In particular, the proposed solution determines the local normal of a 3D planar surface using data directly sampled from the 2D images content, e.g., the image gradient, and some additional data typically available within a Structure from Motion pipeline, e.g., the camera poses.

According to one embodiment, a method for determining a normal of a 3D planar surface is proposed. Multiple images of a 3D scene including a 3D planar surface are received. Each of the multiple images shows a different view of the 3D scene. A set of point correspondences is extracted from the multiple images and includes corresponding points in the multiple images with respect to a 3D point located on the 3D planar surface. Image gradients are determined for the multiple images based on the set of point correspondences, and a normal of the 3D planar surface is determined using the determined image gradients.

In one embodiment, the method further comprises: transforming each of the multiple images as a function defined on a unit-sphere; determining spherical image gradients corresponding to the functions of the multiple images; and determining the normal of the 3D planar surface using the determined spherical image gradient.

In one embodiment, the proposed method can be applied and integrated in a Structure from Motion process.

In addition, in the embodiments, the determination of the normal of a 3D planar surface can be performed with a calibrated camera condition and with known camera poses. According to one embodiment, an apparatus for determining a normal of a 3D planar surface is introduced, which comprises a reception unit and an operation unit. The reception unit is configured to receive multiple images of a 3D scene including a 3D planar surface, where each of the multiple images shows a different view of the 3D scene. The operation unit is configured to extract a set of point correspondences from the multiple images, determine image gradients for the multiple images based on the set of point correspondence, and determine a normal of the 3D planar surface using the determined image gradients. The extracted set of point correspondences includes corresponding points in the multiple images with respect to a 3D point located on the 3D planar surface.

In one embodiment, the operation unit is further configured to transform each of the multiple images as a function defined on a unit-sphere, determine spherical image gradients corresponding to the functions of the multiple images, and determine the normal of the 3D planar surface using the determined spherical image gradient.

Also, a computer readable storage medium has stored therein instructions for determining a normal of a 3D planar surface, which, when executed by the computer, cause the computer to: receive multiple images of a 3D scene including a 3D planar surface, each of the multiple images showing a different view of the 3D scene; extract a set of point correspondences from the multiple images, the set of point correspondences including corresponding points in the multiple images with respect to a 3D point located on the 3D planar surface; determine image gradients for the multiple images based on the set of point correspondence; and determine a normal of the 3D planar surface using the determined image gradients.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

The proposed methods provide improved solutions for determining a normal of a 3D planar surface. The method relies on visual data, e.g., image gradient, and does not require an additional scanning sensor. By formulating the normal estimation problem as a linear system, the methods determine a normal of a 3D planar surface in a closed form, which significantly reduce the computational effort and cost compared to other iterative approaches. By using local image gradients to derive the local surface normal directly, as performed in the proposed methods, it is no longer necessary to make the general assumption that a large image area corresponds to a 3D planar surface, which is normally used for a robust estimation of an inter-view planar homography. This makes the proposed methods directly exploitable also for the reconstruction of a general 3D surface. Such proposed methods can be convenient and efficient for various demands or purposes.

In addition to the direct application of the proposed methods on planar scene reconstruction, the proposed methods can also be integrated within a general 3D reconstruction tool or procedure and thus improve the same. For example, within a Structure from Motion (SfM) framework, a large set of feature matches is normally built across a multi-view dataset and is used to estimate a corresponding cloud of 3D points and the pose of each contributing view. In general, the surfaces of a real scene can be assumed locally planar as long as the observation area remains sufficiently small. Under this condition, the above proposed methods can be employed in a general SfM framework to extend the reconstructed scene also with the local 3D normal vector of the observed surface associated with each point in the 3D cloud. Because it is common to apply the reconstructed model from SfM framework for further uses, such as estimation of a dense surface, the local normal vectors that can be produced and made available by the use of the improved solutions for determining normals of 3D planar surfaces can provide a noticeable advantage when these improved solutions are applied to such further uses.

## BRIEF DESCRIPTION OF THE DRAWINGS

For a better understanding of the present principles, the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims and exhibited in the figures, which are introduced as follows:

Fig. 1    schematically shows that a normal of a 3D planar surface can be determined using image patches given by the neighborhoods of a set of corresponding points extracted from multiple images;

Fig. 2    is a flow chart illustrating one embodiment of a method for determining a normal of a 3D planar surface;

Fig. 3    schematically illustrates a geometrical interpretation of a Jacobian $\nabla^{x_a} x_b$ by calculating the differential variation of $x_b$ corresponding to a differential variation of $x_a$ in the spherical coordinates, under the assumption that the two images are related by a homography $H_{a,b}$;

Fig. 4    shows several samples of synthetic views on a planar surface in one embodiment of the proposed method;

Figs. 5-6    show the evaluation results of one embodiment of the proposed method; and

Fig. 7    is a schematic diagram illustrating a preferred embodiment of an apparatus configured to perform the embodiments of a method for determining a normal of a 3D planar surface.

**DETAILED DESCRIPTION OF PREFERRED EMBODIMENTS**

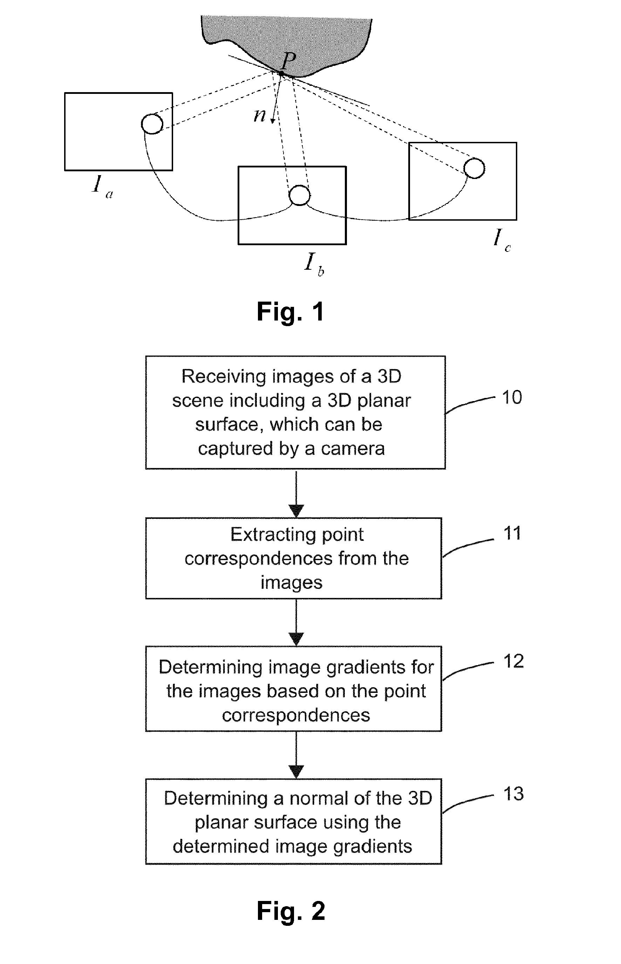

Fig. 1 schematically illustrates in a diagram that a normal of a 3D planar surface (*n*) can be estimated and determined using image patches, which are given by the neighborhoods of a set of corresponding points extracted from multiple images (Ia, Ib and Ic). The 3D planar surface can be considered a tangent plane to a point on the surface of the object, e.g. the plane P of the object shown in Fig. 1. The multiple images can be separate 2D images of the object at one point in time intended to provide the actual object contour or can be a stereoscopic image pair at different points in time or from different perspectives. More specifically, the plane normal is inferred in closed form using an image-based approach, which is based on the analysis of the underlying transformation relating the image gradient sampled from the target images on the matched image points.

Accordingly, Fig. 2 schematically illustrates a preferred embodiment of the method for determining a normal of a 3D planar surface. First, multiple images of a 3D scene is received 10. The 3D scene means a 3D scenario at one point in time which includes a 3D planar surface that is captured in multiple images. A set of point correspondences is extracted 11 by performing pairwise images matching on the multiple images. The Point correspondences are propagated to build clusters of corresponding points in the multiple images that correspond to a same 3D point. Preferably, one corresponding point per image of the multiple images are extracted, where all the corresponding points are projected from a same physical 3D point. Each 3D point is assumed to belong to a 3D planar patch. Image gradients for the multiple images are determined 12 based on the set of point correspondences, which will be explained in detail below. Then a normal of the 3D planar surface is determined 13 using the determined image gradients.

In most circumstances, the received multiple images can be captured by any kind of camera that is feasible in different situations and for different demands. The point correspondences of the multiple images can be optionally extracted 11 using any suitable methods and techniques known in the field.

Preferably, the proposed method further comprises transforming each of the multiple images as a function defined on a unit-sphere. Spherical image gradients are then determined corresponding to the functions of the multiple images, and accordingly, the normal of the 3D planar surface is determined 13 using the determined spherical image gradient.

One embodiment of the proposed method for determining a normal of a 3D planar surface will be described and explained in the following in detail. It is preferably performed with the assumption of a calibrated camera condition and with known camera poses.

In general, the image points on the received multiple images are represented by the pixel coordinates of the 2D images. In a calibrated camera condition, this representation can be converted onto a 3D unit-sphere

$$S2 = \{x \in R^3 : \|x\| = 1\} \ ,$$

which provides a convenient space for the formalization of 3D estimation problems. The image point conversion can be performed by inverting a camera projection model as expressed in equation (1), which is preliminarily characterized in a general calibration process:

$$x = \eta\big(\Pi^{-1}(m;\ \theta_c)\big), \tag{1}$$

where $\Pi(x;\ \theta_c)$: $R^3 \to P^2$ is the camera projection mapping from a 3D Euclidean camera space to a 2D projective space of the camera retinal plane and is parameterized by the vector $\theta_c$, *m* is an image point expressed in pixel coordinates, $\Pi^{-1})(m;\ \theta_c)$ is the under-constrained inversion of the projection function $\Pi$, and $\eta(.)$ is a unit-norm normalization of a n-D vector.

With the assumption of pre-known camera poses, a set of Euclidean transformation $T = \{R_{w,i} \in S0(3), t_i \in R^3\}_{i=1,...,N}$ can be implied as a pre-known condition for the proposed method. This transformation converts 3D point coordinates from the world reference frame to the 3D Euclidean space aligned with *N* cameras. In other words, a 3D point $X \in R^3$ can be converted in the Euclidean space of an *i*-th camera as follows:

$$X_c = R_{w,i} X + t_i \, , \qquad\qquad (2)$$

and the corresponding image point is given by

$$x_c = \frac{X_c}{\lambda} = \eta(X_c),$$

where $\lambda$ is the projective depth.

Using the above notation, each of the received images can be regarded as a function defined on a unit-sphere:

$$\tilde{I}(x) : S2 \rightarrow R \, .$$

m

Knowing an image gradient $\overset{m}{\nabla} I(m)$ of the received 2D images $I(m)$, the spherical image gradient can be determined per equation (3):

$$\overset{x}{\nabla} \tilde{I}(x) = (\overset{x}{\nabla} m(x))^T \overset{m}{\nabla} I(m) \, , \qquad\qquad (3)$$

where $\overset{x}{\nabla} m(x)$ is the Jacobian of the coordinates transformation from equation (1).

Optionally, a pre-processing step on the input image set to realize the undistorted warp can be performed, which is a standard operation for calibrated camera images. This pre-processing step can simplify the gradient transformation and ease the analytical handling of the gradient transformation, and thus the received 2D images can be assumed to be distortion-free. In this case, the camera projection model is reduced to a simple 3x3 upper triangular matrix $\kappa$ representing a pinhole perspective projection, and the equation (3) can thus be expressed in equation (4) as follows:

$$\overset{x}{\nabla} \tilde{I}(x) = \left( I_{2,3} \frac{(z^T \kappa x)\kappa - \kappa x z^T \kappa}{(z^T \kappa x)^2} \right)^T \overset{m}{\nabla} I(m) \, , \qquad\qquad (4)$$

where $I_{2,3} = \begin{bmatrix} 1 & 0 & 0 \\ 0 & 1 & 0 \end{bmatrix}$ and z = [0 0 1]$^T$.

It should be noted that the above pre-processing step is optional. The spherical gradient of the received 2D images can also be directly obtained with consideration of the distortion model during determination and computation of the Jacobian of the coordinated transformation as shown in equation (1).

Subsequently, a geometrical relation among the received multiple images observing the planar surface can be described. In general, a 3D plane can be defined by an equation $X^T n + d = 0$, where $n$ is the plane normal and $d$ is its distance from the original of the reference frame. In this embodiment, by denoting $(x_a, x_b) \in S2$ as the two projections of a 3D point $X$ on two images A and B, with $(X_a, X_b)$ the corresponding 3D points expressed in the two camera spaces, and by denoting $\{R_{a,b}, t_{a,b}\}$ as the underlying Euclidean transformation with $X_b = R_{a,b} X_a + t_{a,b}$, it can be shown that $(x_a, x_b)$ are related on the projective space by the following equation (5):

$$\tilde{x}_b \sim \left( R_{a,b} + \frac{t_{a,b} \cdot n_a^T}{d} \right) \tilde{x}_a \, , \qquad\qquad (5)$$

where $n_a = R_{w,a}\, n$ is the plane normal expressed in the Euclidean reference of the image A, and $\tilde{x}$ is the 3D vector of the homogeneous coordinates corresponding to the image point $x$, where $x = \eta(\tilde{x}) = \frac{\tilde{x}}{\lambda}$ for $\lambda \neq 0$.

The equation (5) essentially shows that any two views of a same planar surface are related by a homography, using the conversion of 2D images onto a 3D unit-sphere, i.e., $\bar{l}_b(\tilde{x}_b) = \bar{l}_a(\tilde{x}_a)$. By differentiating both sides of the previous equation, one obtains:

$$\overset{x_b}{\nabla} \widetilde{I}_b(x_b) = (\overset{x_a}{\nabla} x_b)^T \widetilde{I}_a(x_a), \qquad (6)$$

which relates the spherical gradients to the corresponding image gradient filed.

Calculating the differential variation of $x_b$ corresponding to a differential variation of $x_a$, the Jacobian of the spherical coordinates in the case of homography transformation is given as follows:

$$\overset{x_a}{\nabla} x_b = \gamma P_{x_b}(R_{a,b} + t_{a,b}\hat{n}_a^T), \qquad (7)$$

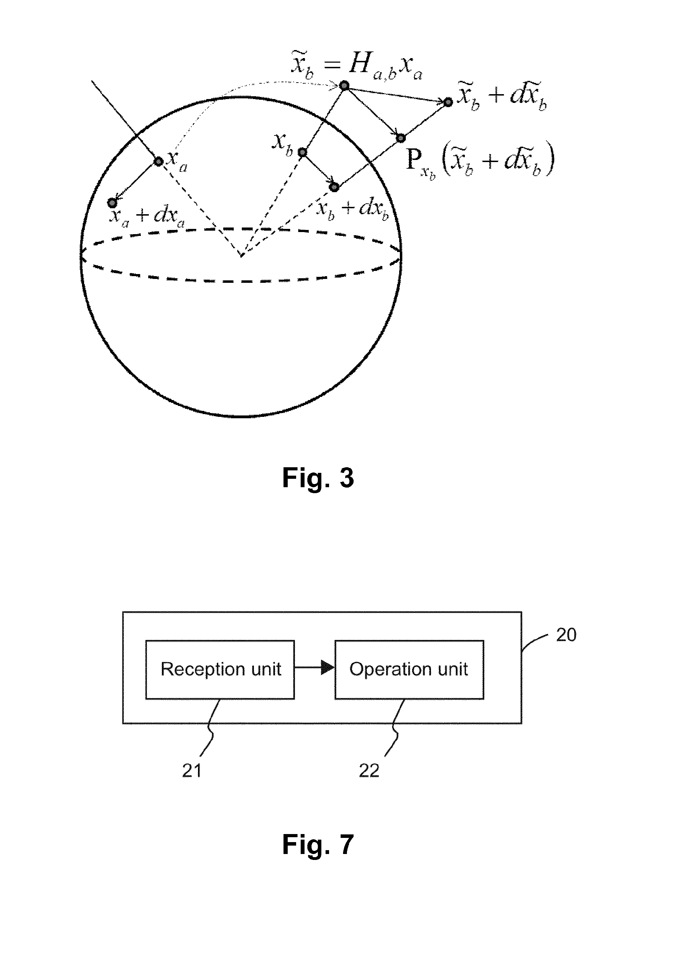

where $P_x = I_3 - xx^T$ is the orthogonal-projection matrix projecting a 3D vector on the plane orthogonal to $x$, and $\hat{n}_a = \frac{n_a}{d}$ represents that the plane normal $n_a$ is scaled by d, where $(n_a, d)$ are the plane parameters. Fig. 3 shows the geometrical interpretation of equation (7).

Substituting equation (7) in equation (6) yields equation (8) as follows:

$$\left[ \overset{x_a}{\nabla} \widetilde{I}_a(x_a) \right]_{\times} \cdot (R_{a,b}^T \cdot P_{x_b} \cdot \overset{x_b}{\nabla} \widetilde{I}_b(x_b) \cdot \overline{X}_a^T + t_{a,b}^T \cdot P_{x_b} \cdot \overset{x_b}{\nabla} \widetilde{I}_b(x_b) \cdot I_3)\hat{n}_a = 0 . \qquad (8)$$

Therefore, given a set of point correspondences induced by 3D points located on a planar surface, equations of the same form as equation (8) can be stacked and a homogeneous linear system $A\tilde{n} = 0$ with the unknown plane normal, $\hat{n}$, can be built. In equation (8), with the available data of the camera poses, the spherical coordinates of point correspondences and the corresponding spherical gradients, the unknown plane normal $\hat{n}$ can be calculated and determined. The 3D point $\overline{\overline{x}}_a$ can be any point located on the 3D planar surface, as $\overline{X}_a^T \hat{n}_a = 1$, and is not required to be in correspondence with image points of the received multiple images. In practice, there would be a unique solution for equation (8) when two images and two image point correspondences are given. For a wider dataset, the resulting over-constrained data can be solved in least square sense by means of Singular Value Decomposition.

**Evaluation**

The above described embodiment of the method for determining a normal of a 3D planar surface is evaluated on simulated data.

A virtual scene is generated tacking the plane $Z = 0$ as a reference which is textured with a 2D sinusoidal periodic pattern. A set of cameras is dislocated uniformly along a horizontal circular trajectory at height $Z = 10$, with the optical axis pointing towards the origin. Each camera is modeled as a **640 × 480** pixel sensor with a 50° horizontal field of view. Some 3D points are randomly sampled on the planar surface in a small neighborhood, and then the corresponding image points are analytically calculated via perspective projection and corrupted with a Gaussian noise.

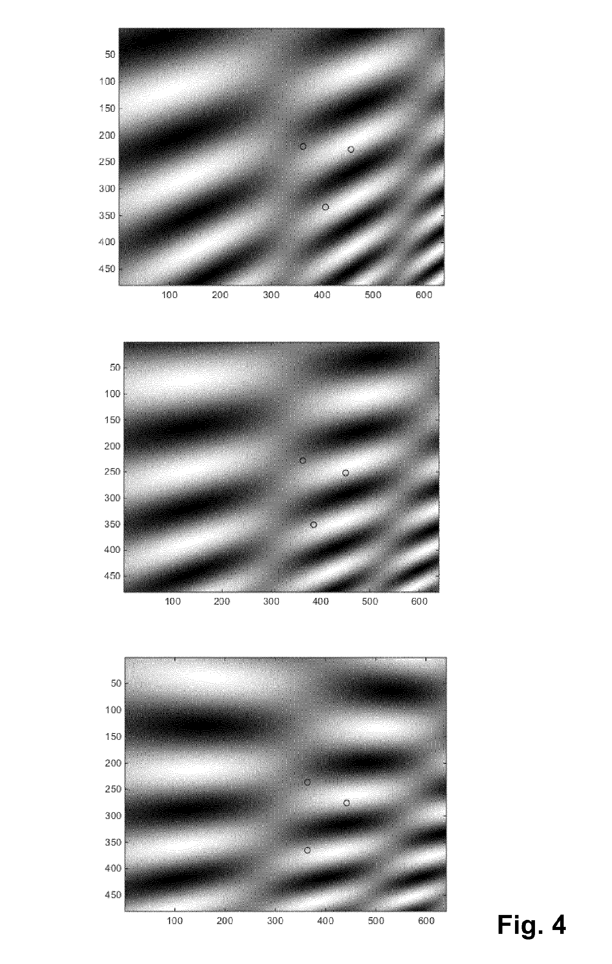

Fig. 4 shows three samples of the dataset of the synthetic views observed from different viewpoints. The marked points on the images are the corresponding image points used to sample an image gradient.

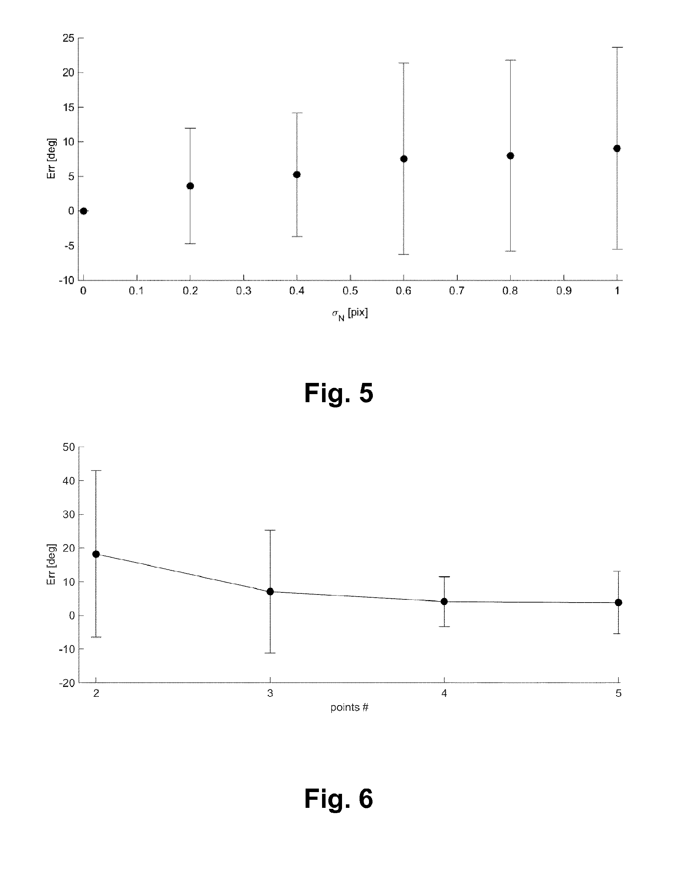

In a first test, the standard deviation of the image projection noise ranges in the interval of [0;1] pixels. For each noise intensity values, a new scene is generated 100 times, and the median and variance of the estimation error of the plane normal are taken for an accuracy measure. The error measure is provided by the angle expressed in degrees between the actual plane normal, $z = [0\ 0\ 1]$, and the estimated one. Fig. 5 shows the results obtained from this first test with increasing level of image projection noise.

In a second test, the image noise intensity is kept fixed whereas the number of sampled points ranges in the interval of [2;5] pixels. Similar to the first test, 100 different scenes are randomly generated for each size of point set, and the same error measure is collected. Fig. 6 shows the results obtained from this second test with increasing size of the dataset of point correspondences.

These results show that, under the assumption of known camera poses, the normal of a 3D planar surface can be recovered with a high accuracy, using merely a few samples of the image gradient of the multiple images. In other words, it is shown that a few samples within the image patch of each triangulated feature is enough to constrain a system according to equation (8) and also achieve a good estimation accuracy. It also shows that the proposed method is suitable and can be integrated within a 3D reconstruction pipeline to improve the reconstruction result.

Fig. 7 schematically depicts an apparatus 20 configured to perform a method for determining a normal of a 3D planar surface. The apparatus 20 comprises a reception unit 21 and an operation unit 22. The reception unit 21 is configured to receive 10 multiple images of a 3D scene including a 3D planar surface in which each of the multiple images shows a different view of the 3D scene. The operation unit 22 is configured to extract 11 a set of point correspondences from the multiple images, to determine 12 image gradients for the multiple images based on the set of point correspondence, and to determine 13 a normal of the 3D planar surface using the determined image gradients. The set of the point correspondences includes corresponding points in the multiple images with respect to a 3D point located on the 3D planar surface.

The operation unit 22 can further be configured to transform each of the multiple images as a function defined on a unit-sphere, determine spherical image gradients corresponding to the functions of the multiple images, and determine the normal of the 3D planar surface using the determined spherical image gradient.

In addition, the apparatus 20 can further comprise a display device and a user interface (not shown) that are configured to show and illustrate the received image including the 3D planar surface and the determined normal of the 3D planar surface.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

**REFERENCES**

[I] R. B. Rusu, "Semantic 3D object maps for everyday manipulation in human living environments", Kunstliche Intelligenz, November 2010, Volume 24, Issue 4, pp 345-348

[II] S. Holzert, et al., "Adaptive neighborhood selection for real-time surface normal estimation from organized point cloud data using integral images", 2012 IEEE/RSJ International Conference on Intelligent Robots and Systems (IROS), pp 2684-2689, October 2012

[III] Q. Yang and N. Ahuja, "Surface reflectance and normal estimation from photometric stereo", Computer vision and Image Understanding, Volume 116, Issue 7, pp 793-802, July 2012

[IV] R. Hartley and A. Zisserman, Multiple View Geometry in Computer Vision (2 ed.). Cambridge University Press, New York, NY, USA, pp. 155-157, 2003

**Claims**

**1.** A method for determining a normal of a 3D planar surface, comprising:

- receiving (10) multiple images of a 3D scene including a 3D planar surface, each of the multiple images showing a different view of the 3D scene;
- extracting (11) a set of point correspondences from the multiple images, the set of point correspondences including corresponding points in the multiple images with respect to a 3D point located on the 3D planar surface;
- determining (12) image gradients for the multiple images based on the set of point correspondences; and
- determining (13) a normal of the 3D planar surface using the determined image gradients.

**2.** The method of claim 1, further comprising:

- transforming each of the multiple images as a function defined on a unit-sphere;
- determining spherical image gradients corresponding to the functions of the multiple images; and
- determining the normal of the 3D planar surface using the determined spherical image gradient.

**3.** The method of claim 2, wherein the spherical image gradient is defined as

$$\overset{x}{\nabla}\widetilde{I}(x) = (\overset{x}{\nabla}m(x))^T \overset{m}{\nabla}I(m) \, ,$$

where $\widetilde{I}(x) : S2 \to R$ is a unit-sphere on which a 2D image can be transformed as a function, $m$ is an image point expressed in pixel coordinates, $\overset{m}{\nabla}I(m)$ is the image gradient of a 2D image, and $\overset{x}{\nabla}m(x)$ is the Jacobian of the coordinates transformation.

**4.** The method of claim 3, wherein the normal of the 3D planar surface is determined using

$$\left[\overset{x_a}{\nabla}\widetilde{I}_a(x_a)\right]_\times \cdot (R_{a,b}^T \cdot P_{x_b} \cdot \overset{x_b}{\nabla}\widetilde{I}_b(x_b) \cdot \overline{X}_a^T + t_{a,b}^T \cdot P_{x_b} \cdot \overset{x_b}{\nabla}\widetilde{I}_b(x_b) \cdot I_3)\hat{n}_a = 0 \, ,$$

where $\overset{x}{\nabla}\widetilde{I}(x)$ is the spherical image gradient, $\{R_{a,b}, t_{a,b}\}$ is as an Euclidean transformation in the form of $X_c = R_{w,i}X + t_i$ where a 3D point $X \in R^3$ is converted in the Euclidean space of an $i$-th camera, $P_x = I_3 - xx^T$ is the orthogonal-projection matrix projecting a 3D vector on the plane orthogonal to $x$, and $\hat{n}_a = \dfrac{n_a}{d}$ represents that the plane normal $n_a$ is scaled by $d$, where $(n_a, d)$ are plane parameters.

**5.** The method of one of the preceding claims, wherein the method is applied and integrated in a Structure from Motion process.

**6.** The method of one of the preceding claims, wherein determining the normal of a 3D planar surface is performed with a calibrated camera condition and with known camera poses.

**7.** An apparatus for determining a normal of a 3D planar surface, comprising:

- a reception unit (21) configured to receive multiple images of a 3D scene including a 3D planar surface, each of the multiple images showing a different view of the 3D scene; and
- an operation unit (22) configured to
  extract (11) a set of point correspondences from the multiple images, the set of point correspondences including corresponding points in the multiple images with respect to a 3D point located on the 3D planar surface, determine (12) image gradients for the multiple images based on the set of point correspondence, and determine (13) a normal of the 3D planar surface using the determined image gradients.

**8.** The apparatus of claim 7, wherein the operation unit (22) is further configured to
transform each of the multiple images as a function defined on a unit-sphere,
determine spherical image gradients corresponding to the functions of the multiple images, and
determine the normal of the 3D planar surface using the determined spherical image gradient.

**9.** The apparatus of claim 7 or 8, wherein the reception unit receives the images from at least one camera, and wherein determining the normal of a 3D planar surface is performed with calibrated camera conditions and with known camera poses.

10. A computer readable storage medium having stored therein instructions for determining a normal of a planar surface, which when executed by a computer, cause the computer to:

- receive multiple images of a 3D scene including a 3D planar surface, each of the multiple images showing a different view of the 3D scene;
- extract a set of point correspondences from the multiple images, the set of point correspondences including corresponding points in the multiple images with respect to a 3D point located on the 3D planar surface;
- determine image gradients for the multiple images based on the set of point correspondence; and
- determine a normal of the 3D planar surface using the determined image gradients.

11. The computer readable storage medium of claim 10, wherein determining the normal of a 3D planar surface is performed with a calibrated camera condition and with known camera poses.

**Fig. 1**

**Fig. 2**

$$\widetilde{x}_b = H_{a,b} x_a$$

$$\widetilde{x}_b + d\widetilde{x}_b$$

$$x_a$$

$$x_b$$

$$P_{x_b}\left(\widetilde{x}_b + d\widetilde{x}_b\right)$$

$$x_a + dx_a$$

$$x_b + dx_b$$

**Fig. 3**

| Reception unit | → | Operation unit |
|---|---|---|

20

21        22

**Fig. 7**

Fig. 4

# Fig. 5

# Fig. 6

Europäisches
Patentamt

European
Patent Office

Office européen
des brevets

# EUROPEAN SEARCH REPORT

Application Number

EP 15 30 6507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLAUME CARON ET AL: "Tracking planes in omnidirectional stereovision", ROBOTICS AND AUTOMATION (ICRA), 2011 IEEE INTERNATIONAL CONFERENCE ON, IEEE, 9 May 2011 (2011-05-09), pages 6306-6311, XP032033611, DOI: 10.1109/ICRA.2011.5979739 ISBN: 978-1-61284-386-5 | 1-3,5-11 | INV. G06T7/00 |
| A | * abstract * * page 6306, right-hand column - page 6309, left-hand column * | 4 | |
| A | Anonymous: "Jacobians and spherical polar gradient < Peeter Joot's (OLD) Blog.", , 8 December 2009 (2009-12-08), XP055261798, Retrieved from the Internet: URL:https://peeterjoot.wordpress.com/2009/12/08/jacobians-and-spherical-polar-gradient/ [retrieved on 2016-03-31] * page 5 - page 6 * | 3,4 | |
| A | DEMONCEAUX C ET AL: "Omnidirectional image processing using geodesic metric", IMAGE PROCESSING (ICIP), 2009 16TH IEEE INTERNATIONAL CONFERENCE ON, IEEE, PISCATAWAY, NJ, USA, 7 November 2009 (2009-11-07), pages 221-224, XP031629149, ISBN: 978-1-4244-5653-6 * page 221 * | 3,4 | |

TECHNICAL FIELDS SEARCHED (IPC)

G06T

The present search report has been drawn up for all claims

| Place of search | Date of completion of the search | Examiner |
|---|---|---|
| Munich | 12 April 2016 | Maier, Werner |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. B. RUSU.** Semantic 3D object maps for everyday manipulation in human living environments. *Kunstliche Intelligenz,* November 2010, vol. 24 (4), 345-348
- **S. HOLZERT et al.** Adaptive neighborhood selection for real-time surface normal estimation from organized point cloud data using integral images. *2012 IEEE/RSJ International Conference on Intelligent Robots and Systems (IROS),* October 2012, 2684-2689

- **Q. YANG ; N. AHUJA.** Surface reflectance and normal estimation from photometric stereo. *Computer vision and Image Understanding,* July 2012, vol. 116 (7), 793-802
- **R. HARTLEY ; A. ZISSERMAN.** Multiple View Geometry in Computer Vision. Cambridge University Press, 2003, 155-157